# EUROPEAN PATENT APPLICATION

(11) **EP 3 280 037 A1**
(43) Date of publication of application: **07.02.2018**
(21) Application number: 16772769.2
(22) Date of filing: 29.03.2016
(51) Int. Cl.: H02K 33/16

(54) **LINEAR ACTUATOR AND METHOD FOR MANUFACTURING LINEAR ACTUATOR**

(30) Priority: 31.03.2015 JP 2015073348
(71) Applicant: Nidec Sankyo Corporation, Suwa-gun, Nagano 393-8511 (JP)
(72) Inventor: TAKEDA, Tadashi, Suwa-gun Nagano 393-8511 (JP); KITAHARA, Hiroshi, Suwa-gun Nagano 393-8511 (JP)
(74) Representative: Becker Kurig Straus
(86) International application number: PCT/JP2016/059997
(87) International publication number: WO 2016/158888

(57) **Abstract**

The present invention provides a linear actuator in which a distance between a movable element and a stationary element, where a damper member is inserted, is accurately controlled. For example; a linear actuator 1 includes; a movable element 2, a stationary element 3, and a damper member 5 placed between the movable element 2 and the stationary element 3. The stationary element 3 is provided with a coil bobbin 31 that supports the movable element 2 via a spring 4 in such a way as to be movable, and a base 32 that overlaps with the coil bobbin 31 from a side opposite to the movable element 2. The coil bobbin 31 is provided with projection parts 40 protruding toward the base 32. The damper member 5 is inserted between a bottom surface 11a of a core member 11 of the movable element and a top surface 32a of the base 32. By way of crushing tip parts of the projection parts 40, a distance between the bottom surface 11a of the core member 11 and the top surface 32a of the base 32 is made so as to have a specified dimension 'S' that is a length of the damper member 5.

## Description

### [Field of the Invention]

The present invention relates to a linear actuator provided with a damper member for suppressing resonance, and a manufacturing method therefor.

### [Background]

As a device for notifying of an incoming call and the like of a mobile phone, by way of a vibration, there is proposed a liner actuator. A linear actuator described in Patent Document 1 is provided with a movable element having a permanent magnet, and a stationary element having a coil. The stationary element supports the movable element so as to be movable, via an elastic member, such as a spring component and the like. In the case of the linear actuator described in the document, an intensity level and a frequency of a vibration vary according to a driving signal supplied to the coil.

### [Prior Art Document]

### [Patent Document]

Patent Document 1: Japanese Unexamined Patent Application Publication No. 2006-7161

### [Summary of Invention]

### [Problem to Be Solved]

In a linear actuator, sometimes a movable element may resonate, depending on a vibration frequency, at a time when the movable element vibrates.

In such a situation, it is conceivable for suppressing resonance to insert a damper member, which is extendable in a moving direction of the movable element, between a movable-element-side facing surface of the movable element and a stationary-element-side facing surface of a stationary element; the movable-element-side facing surface and the stationary-element-side facing surface facing each other in the moving direction of the movable element. Unfortunately, in this case, without controlling a dimension of a distance between the movable-element-side facing surface and the stationary-element-side facing surface where the damper member is inserted, in such a way as to make the dimension of the distance constant, a stroke and a resonance frequency of the movable element vary among manufactured products, due to the damper member inserted between the facing surfaces.

With the issue described above being taken into consideration, it is an issue of the present invention to provide a linear actuator in which a distance between a movable element and a stationary element, where a damper member is inserted, is accurately controlled; and to propose a structure and a manufacturing method of such a linear actuator.

### [Means to Solve the Problem]

In order to solve the issue described above, a linear actuator according to the present invention includes: a movable element; a stationary element; and a damper member inserted between a movable-element-side facing surface of the movable element and a stationary-element-side facing surface of the stationary element, the movable-element-side facing surface and the stationary-element-side facing surface facing each other in a moving direction of the movable element; wherein, the stationary element is provided with a first element that supports the movable element via a spring member in such a way as to be movable, and a second element that includes the stationary-element-side facing surface and overlaps with the first element from a side opposite to the movable element in the moving direction; and between the first element and the second element, there is provided a distance adjusting part that has adjusted a distance between the first element and the second element in the moving direction, by way of deforming at least one of the first element and the second element.

According to the present invention; between the first element and the second element, which make up the stationary element, there is provided the distance adjusting part in order to adjust the distance between the first element, supporting the movable element, and the second element, provided with the stationary-element-side facing surface, in the moving direction. Therefore, by way of adjusting the distance between the first element and the second element with the distance adjusting part, a dimension of the distance between the movable-element-side facing surface and the stationary-element-side facing surface can be set with a specified dimension corresponding to a length of the damper member in the moving direction. Accordingly, it becomes possible to avoid variations in a stroke and a resonance frequency of the movable element, among manufactured products, due to the damper member inserted between the movable-element-side facing surface and the stationary-element-side facing surface.

In the present invention, it is preferable that the distance adjusting part is a projection part protruding from one of the first element and the second element toward the other; and a tip part of the projection part is crushed. According to this configuration, a distance between the first element and the second element is adjusted by way of crushing the tip part of the projection part that is provided to, at least, one of the first element and the second element, in such a way that the dimension of the distance between the movable-element-side facing surface and the stationary-element-side facing surface can be set with the specified dimension.

In the present invention, it is preferable that the distance adjusting part is a projection part protruding from the first element toward the second element; and a distance dimension, with which a tip of the projection part in a crushed state and the movable-element-side facing surface are apart from each other in the moving direction, is the same as the length of the damper member in the moving direction. According to this configuration, a stroke of the movable element can easily be secured.

In the present invention; for accurately crushing the tip part of the projection part formed in the first element, it is preferable that the first element is made of a resin material; and the tip part of the projection part is melted and crushed by heat.

In the present invention; for moving the movable element, it is preferable that the linear actuator includes a magnetic drive mechanism for moving the movable element; the magnetic drive mechanism includes a permanent magnet held in the movable element, and a drive coil held in the stationary element; the first element is a coil bobbin that surrounds the permanent magnet from a direction intersecting the moving direction; and the drive coil is wound around the coil bobbin.

In the present invention; for suppressing resonance of the movable element, while allowing the movable element to move, it is preferable that the damper member is a gel damper member.

Then, a method for manufacturing the linear actuator, according to the present invention, includes; supporting the movable element with the first element via the spring member; making the distance dimension between the tip of the projection part and the movable-element-side facing surface, with a specified dimension that is predetermined, by way of crushing the tip part of the projection part provided to the first element; and overlaying the second element on the first element, from a side opposite to the movable element in the moving direction; and placing the damper member having the specified dimension as a dimension in the moving direction, between the movable-element-side facing surface and the stationary-element-side facing surface.

According to the present invention; by way of crushing the tip part of the projection part placed between the first element and the second element in the stationary element, the dimension between the movable-element-side facing surface and the stationary-element-side facing surface is made to be the specified dimension corresponding to a dimension of the damper member. Therefore, variations in a stroke and a resonance frequency of the movable element, due to the damper member inserted between the movable-element-side facing surface and the stationary-element-side facing surface, are not observed among manufactured products. Furthermore, the distance between the movable-element-side facing surface and the stationary-element-side facing surface is the same as the length of the damper member, and therefore a stroke of the movable element can easily be secured.

### [Advantageous Effect of the Invention]

According to the present invention, the dimension of the distance between the movable-element-side facing surface of the movable element and the stationary-element-side facing surface of the stationary element, where the damper member is inserted, can be made to be the specified dimension. Therefore, it is possible to avoid a variance of the stroke and the resonance frequency of the movable element, due to the damper member inserted between the movable-element-side facing surface and the stationary-element-side facing surface.

### [Brief Description of the Drawings]

FIG. 1 is a perspective view of a linear actuator according to a first embodiment of the present invention.
FIG. 2(a) and FIG. 2(b) include cross-sectional views of the linear actuator shown in FIG. 1.
FIG. 3 is an exploded perspective view of the linear actuator shown in FIG. 1.
FIG. 4(a) and FIG. 4(b) include perspective views showing a coil bobbin, a driving coil, and a spring.
FIG. 5(a) and FIG. 5(b) include explanatory drawings of a method for manufacturing the linear actuator shown in FIG. 1.
FIG. 6 is a perspective view of a linear actuator according to a second embodiment of the present invention.
FIG. 7(a) and FIG. 7(b) include cross-sectional views of the linear actuator shown in FIG. 6.
FIG. 8 is an exploded perspective view of the linear actuator shown in FIG. 6.
FIG. 9(a) and FIG. 9(b) include perspective views showing a coil bobbin, a driving coil, and a spring.
FIG. 10(a) and FIG. 10(b) include explanatory drawings of a method for manufacturing the linear actuator shown in FIG. 6.

### [Description of the Preferred Embodiments]

Preferred embodiments of the present invention are explained below, with reference to the drawings.

### (First embodiment)

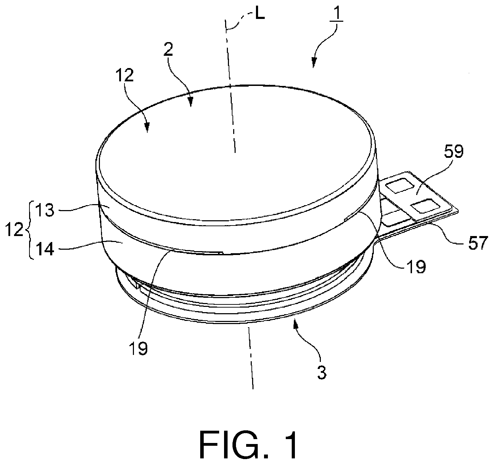

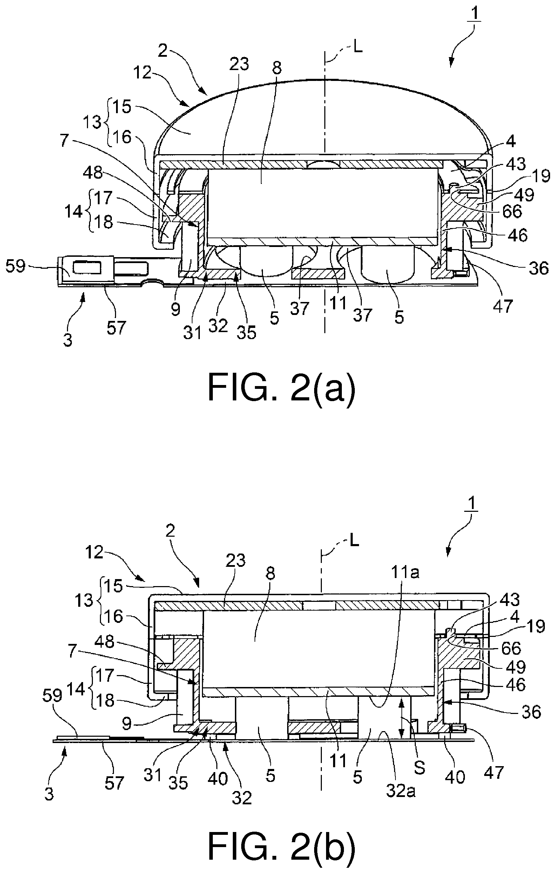

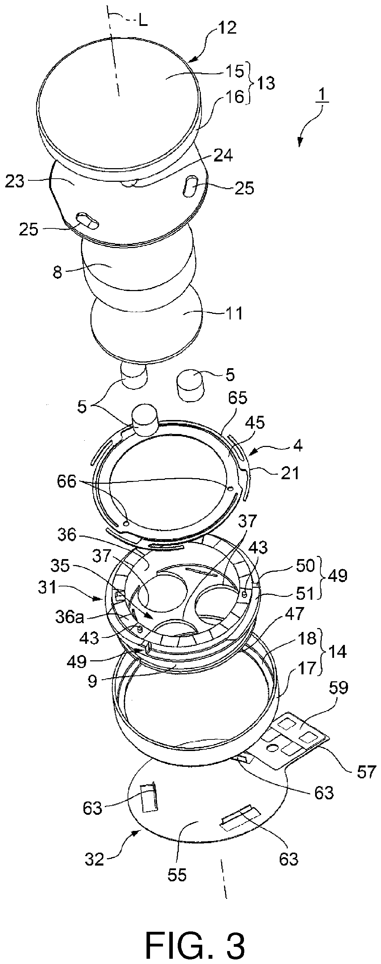

FIG. 1 is a perspective view of a linear actuator according to a first embodiment of the present invention. FIG. 2(a) and FIG. 2(b) include cross-sectional views of the linear actuator shown in FIG. 1. In FIG. 2(a), the cross section of the linear actuator is seen from an obliquely upward direction; and in FIG. 2(b), the cross section of the linear actuator is seen from a direction perpendicular to a moving direction of a movable element. FIG. 3 is an exploded perspective view of the linear actuator shown in FIG. 1.

### (General configuration)

As shown in FIG. 1 through FIG. 3, a linear actuator 1 includes a movable element 2, a stationary element 3, and a spring (spring member) 4 that connects the movable element 2 and the stationary element 3. The stationary element 3 supports the movable element 2 in such a way as to be movable, via the spring 4. Between the movable element 2 and the stationary element 3, three damper members 5 are placed. The linear actuator 1 further includes a magnetic drive mechanism 7 in order to move the movable element 2. The magnetic drive mechanism 7 is provided with a permanent magnet 8 held by the movable element 2, and a drive coil 9 held by the stationary element 3. In the following explanation, a moving direction of the movable element 2 is dealt with as a direction of an axis line 'L'. The direction of the axis line 'L' is consistent with a central axis line of the permanent magnet 8 mounted on the movable element 2 and a central axis line of the drive coil 9 mounted on the stationary element 3. For the purpose of convenience, an upside and a downside of the linear actuator 1 are explained as follows, with reference to upward and downward directions in the drawings. That is to say; in the direction of the axis line 'L', a side where the stationary element 3 is positioned is a downside, meanwhile a side where the movable element 2 is positioned is an upside.

### (Movable element)

The movable element 2 is provided with the permanent magnet 8 extending in the direction of the axis line 'L' (the moving direction of the movable element 2). The permanent magnet 8 is shaped so as to be flattened in such a way as to be short in the direction of the axis line 'L', and the permanent magnet 8 is magnetized with a north pole and a south pole in the direction of the axis line 'L'. The permanent magnet 8 is provided with a top end surface and a bottom end surface that are perpendicular to the direction of the axis line 'L'.

In the meantime, the movable element 2 is provided with a core member 11 that overlaps with the permanent magnet 8 from a downside, and a cap member 12 that covers up the permanent magnet 8 from an upside as well as an outer circumferential side. The permanent magnet 8, the core member 11 and the cap member 12 are placed coaxially. The core member 11 and the cap member 12 are made of a magnetic material.

As show in FIG. 3, the core member 11 is a circular plate member having a constant thickness. A planar shape of the core member 11 is the same as a shape of the bottom end surface of the permanent magnet 8. The core member 11 is fixed to the bottom end surface of the permanent magnet 8 with an adhesive and the like. The core member 11 extends in a direction perpendicular to the axis line 'L'.

The cap member 12 includes an upper cap member 13 and a lower cap member 14. As shown in FIG. 2(a) and FIG. 2(b), the upper cap member 13 includes a circular end plate part 15 having a constant thickness, and an upper cylindrical part 16 protruding downward from an outer circumferential edge of the end plate part 15. The lower cap member 14 includes a lower cylindrical part 17 that continues downward from a bottom end edge of the upper cylindrical part 16, and a protrusion plate part 18 protruding toward an inner circumferential side from a bottom end edge of the lower cylindrical part 17. The protrusion plate part 18 has a constant thickness, and its planar shape is annular. As shown in FIG. 1, the bottom end edge of the upper cylindrical part 16 is provided with cutout parts 19 at three circumferential positions. Each of the cutout parts 19 is provided in order to hold a movable-element-side connection part 21 of the spring 4, by way of sandwiching between the upper cylindrical part 16 and the lower cylindrical part 17, at a time of connecting the upper cylindrical part 16 and the lower cylindrical part 17 by welding and the like.

Moreover, as shown in FIG. 2(a), FIG. 2(b) and FIG. 3, the cap member 12 is provided with a magnetic plate 23 having a constant thickness, which is put into the upper cap member 13 from a downside. The magnetic plate 23 is provided with a round center hole 24 at a center position, and three through-holes for welding 25, which are formed at outer circumferential fringe parts around the axis line 'L' at equal angular intervals. The magnetic plate 23 is fixed to the end plate part 15 of the upper cap member 13, by way of welding that is carried out by making use of an open edge part of the three through-holes for welding 25. Thus, the magnetic plate 23 is laminated on the end plate part 15 in the direction of the axis line 'L'.

The cap member 12 is fixed to the permanent magnet 8, by way of bonding a bottom end surface of the magnetic plate 23 to the top end surface of the permanent magnet 8 with an adhesive and the like. In the meantime, each of the magnetic plate 23 and the end plate part 15 has a larger diameter than the permanent magnet 8 has. Therefore, under a situation where the cap member 12 is fixed to the permanent magnet 8, as shown in FIG. 2(a) and FIG. 2(b), there is circumferentially formed a gap, having a constant clearance, between an annular outer-circumferential surface of the permanent magnet 8 and both the upper cylindrical part 16 as well as the lower cylindrical part 17. Meanwhile, at a time when a situation of the cap member 12 being fixed to the permanent magnet 8 is observed from a lateral direction perpendicular to the direction of the axis line 'L', the protrusion plate part 18 is placed at a position that partially overlaps with the core member 11. Moreover, there is circumferentially formed a gap, having a constant clearance, between an annular inner-circumferential surface of the protrusion plate part 18 and an annular outer-circumferential surface of the core member 11.

### (Stationary element)

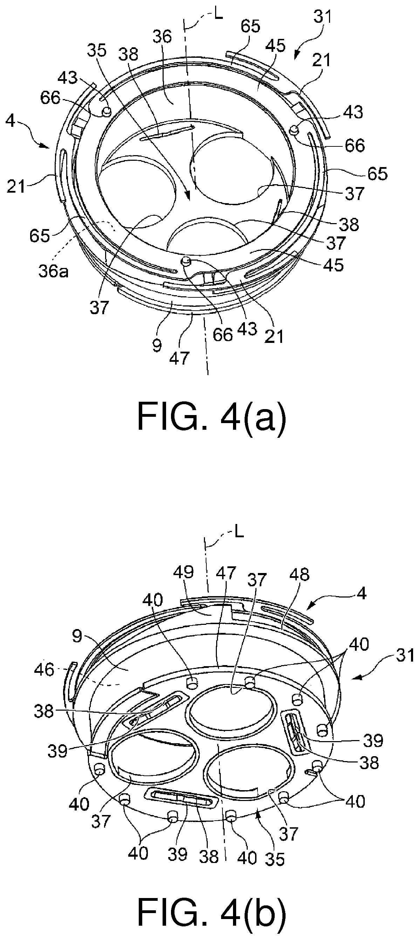

Next, the stationary element 3 is explained with reference to FIG. 2(a) through FIG. 4(b). FIG. 4(a) is a perspective view showing a situation where a coil bobbin is observed from an upper side; while the coil bobbin around which the drive coil 9 is wound, is provided with the spring 4; and meanwhile FIG. 4(b) is a perspective view showing a situation where the coil bobbin is observed from a lower side; while the coil bobbin around which the drive coil 9 is wound, is provided with the spring 4. As shown in FIG. 2(a), FIG. 2(b) and FIG. 3, the stationary element 3 is provided with a coil bobbin 31 (a first element) around which the drive coil 9 is wound, and a plate-like base 32 (a second element) that overlaps with the coil bobbin 31 from a side opposite to the movable element 2. The coil bobbin 31 supports the movable element 2 via the spring 4 in such a way as to be movable in the direction of the axis line 'L'.

### (Coil bobbin)

The coil bobbin 31 is made of a resin material. As shown in FIG. 2(a) and FIG. 2(b), the coil bobbin 31 is provided with a bottom plate part 35 that faces the core member 11 of the movable element 2 in the direction of the axis line 'L', and a cylindrical part 36 that protrudes upward from the bottom plate part 35. An axis line 'L' of the cylindrical part 36 is consistent with an axis line 'L' of the permanent magnet 8.

As shown in FIG. 4(a), three holes 37 for inserting the damper members are formed in the bottom plate part 35. The holes 37 for the damper members are individually provided around the axis line 'L' at equal angular intervals. A slit 38, which linearly stretches in a circumferential direction, is formed between two of the holes 37 for inserting the damper members, which are neighboring in a circumferential direction.

In a bottom surface of the bottom plate part 35, at a position corresponding to each slit 38, there is provided a locating concave part 39 stretching along the slit 38. The slit 38 is positioned at a bottom of the locating concave part 39. Furthermore, at an outer circumferential edge part of the bottom plate part 35, a plurality of projection parts 40 being columnar, projecting downward, are provided at regular intervals. The plurality of projection parts 40 are formed along an outer circumferential edge of the bottom surface of the bottom plate part 35. Then, a tip part of each of the projection parts 40 is crushed at a time when the linear actuator 1 is assembled.

The cylindrical part 36 is provided with three spring retainer projections 43 on its annular top end surface 36a. The three spring retainer projections 43 are placed around the axis line 'L' at equal angular intervals. Each of the spring retainer projections 43 works as a retainer part for retaining a stationary-element-side connection part 45 of the spring 4, and the cylindrical part 36 supports the stationary-element-side connection part 45 from a lower side.

Moreover, as shown in FIG. 2(a) and FIG. 2(b), the cylindrical part 36 is provided with; a tubular torso part 46, wherein the drive coil 9 is wound around an outer circumferential surface of the tubular torso part 46; a lower flange part 47 being annular, which is expanded in its diameter at a lower side of the tubular torso part 46; and an upper flange part 48 being annular, which is expanded in its diameter at an upper side of the tubular torso part 46. Then, in a view from the direction of the axis line 'L', the upper flange part 48 has a larger diameter than the lower flange part 47 has. Accordingly, in a situation where the drive coil 9 is wound around the tubular torso part 46; the lower flange part 47 protrudes a little out of an outer circumferential surface of the drive coil 9 toward an outer side in a radial direction, while the upper flange part 48 protrudes quite a little out of the outer circumferential surface of the drive coil 9 toward the outer side in the radial direction, in comparison with the lower flange part 47.

Between the annular top end surface 36a of an outer circumferential surface of the cylindrical part 36 and the upper flange part 48, there are provided three reinforcing ribs 49 that reinforce the upper flange part 48. The three reinforcing ribs 49 are provided around the axis line 'L' at equal angular intervals. In a view from the direction of the axis line 'L', each of the reinforcing ribs 49 has its outer circumferential surface that overlaps with an outer circumferential surface of the upper flange part 48. Moreover, as shown in FIG. 3, each of the reinforcing ribs 49 is provided with; a rectangular leading surface 50 that leads to the annular top end surface 36a at an elevation being the same as the annular top end surface 36a; and a sloping surface 51 that slopes downward from the leading surface 50 toward one side in a circumferential direction. An end, at the one side in the circumferential direction, of the sloping surface 51 leads to a top surface of the upper flange part 48. The leading surface 50 of each of the reinforcing ribs 49 is displaced with respect to each of the spring retainer projections 43, in a circumferential direction, in such a way that there exists the sloping surface 51 at an outer circumferential side of each of the spring retainer projections 43.

### (Base)

As shown in FIG. 3, the base 32 is provided with a disk plate part 55 and a circuit board supporting part 57, being rectangular, which protrudes outward from the disk plate part 55 in a radial direction. A circuit board 59 is supported by the circuit board supporting part 57. A terminal of the drive coil 9 is connected to the circuit board 59. In the meantime, an outer circumferential edge part of a top surface of the disk plate part 55 and the circuit board supporting part 57 may be covered with an adhesive component. In this case, the adhesive component is an adhesive tape or a material to be applied while having an adhesive property.

The disk plate part 55 is provided with a locating plate 63. The locating plate 63 is formed by way of cutting and raising a part of the disk plate part 55. The coil bobbin 31 is installed on the base 32, by way of inserting the locating plate 63 into the locating concave part 39 of the bottom surface of the bottom plate part 35, so as to locate the coil bobbin 31 in a direction perpendicular to the direction of the axis line 'L'. The coil bobbin 31 is fixed to the base 32 by use of an adhesive filled between the bottom plate part 35 and the base 32.

### (Spring)

The spring 4 is a flat spring component, whose thickness direction is oriented in the direction of the axis line 'L', As shown in FIG. 3 and FIG. 4(a), the spring 4 is provided with; the movable-element-side connection part 21 connected to the movable element 2 (the cap member 12); the stationary-element-side connection part 45, being annular, connected to the stationary element 3 (the coil bobbin 31); and a plurality of arm parts 65 connected to the movable-element-side connection part 21 and the stationary-element-side connection part 45. The stationary-element-side connection part 45 is placed at an inner circumferential side with respect to the movable-element-side connection part 21 and the arm parts 65; and meanwhile the movable-element-side connection part 21 is placed at an outer circumferential side with respect to the arm parts 65.

The movable-element-side connection part 21 is divided into three parts in a circumferential direction. The arm parts 65 individually stretch in the circumferential direction from the three divided parts of the movable-element-side connection part 21. Each divided part of the movable-element-side connection part 21 is fixed to the movable element 2 by way of pinching between the upper cap member 13 and the lower cap member 14, while being inserted into each of the cutout parts 19 of the upper cap member 13.

In the stationary-element-side connection part 45, there are formed retaining holes 66 into which the spring retainer projections 43 of the annular top end surface 36a of the coil bobbin 31 are individually fit. The spring 4 is connected to the coil bobbin 31 by way of inserting each of the spring retainer projections 43 into each of the retaining hole 66.

In a situation where the stationary-element-side connection part 45 of the spring 4 is connected to the coil bobbin 31, and meanwhile the movable-element-side connection part 21 is connected to the cap member 12; the permanent magnet 8 of the movable element 2 is positioned at an inner circumferential side of the coil bobbin 31 of the stationary element 3, as shown in FIG. 2(a) and FIG. 2(b). In the meantime, the protrusion plate part 18 of the cap member 12 is located between the lower flange part 47 and the upper flange part 48 of the coil bobbin 31. Thus, the tubular torso part 46 of the coil bobbin 31 and the drive coil 9 wound around the tubular torso part 46 are placed between an annular inner circumferential surface of the protrusion plate part 18 and an annular outer circumferential surface of the core member 11. Moreover, an annular outer circumferential surface of the upper flange part 48 of the coil bobbin 31 faces an inner circumferential surface of the lower cylindrical part 17 of the cap member 12 across a narrow space thereof.

Under this situation, the upper flange part 48 of the coil bobbin 31 and the lower cylindrical part 17 of the cap member 12 make up a first stopper mechanism to restrict a movable range of the movable element 2 at a time when the movable element 2 moves due to an external force in a direction perpendicular to the axis line 'L'. In the meantime, the upper flange part 48 of the coil bobbin 31 and the protrusion plate part 18 of the cap member 12 make up a second stopper mechanism to restrict a movable range of the movable element 2 at a time when the movable element 2 moves upward due to an external force.

### (Damper members)

As shown in FIG. 3, each of the damper members 5 is columnar. A length of the damper members 5 in the direction of the axis line 'L' is equal to a specified dimension 'S' to be described later, as shown in FIG. 2(b).

As shown in FIG. 2(a), each of the damper members 5 is placed between the movable element 2 and the stationary element 3, while being inserted through each of the holes 37 for inserting the damper members, the holes 37 being provided in the bottom plate part 35 of the coil bobbin 31. Each of the holes 37 for inserting the damper members is a circular opening section having a larger diameter than each of the damper members 5 has. As shown in FIG. 2(b), each of the damper members 5 makes its top end surface contact with a bottom surface 11a (a movable-element-side facing surface) of the core member 11 of the movable element 2, and makes its bottom end surface contact with a top surface 32a (a stationary-element-side facing surface) of the base 32 of the stationary element 3.

Incidentally, the damper members 5 of the present embodiment are made of silicone gel having a needle entering level of 90 to 110. The needle entering level shows a value of an entered depth of a 1/4-cone needle stressed for five seconds, with a total load of 9.38 grams at 25 degrees Celsius, as specified in JIS-K-2207 or JIS-K-2220; wherein the entered depth being expressed in 1/10 mm. The smaller the value is, the harder the material is. Incidentally, fixing the damper members 5 to the core member 11 as well as fixing the damper members 5 to the base 32 are carried out by use of an adhesive material, a gluing agent, or an adherence property of the silicone gel.

### (Method for manufacturing the linear actuator)

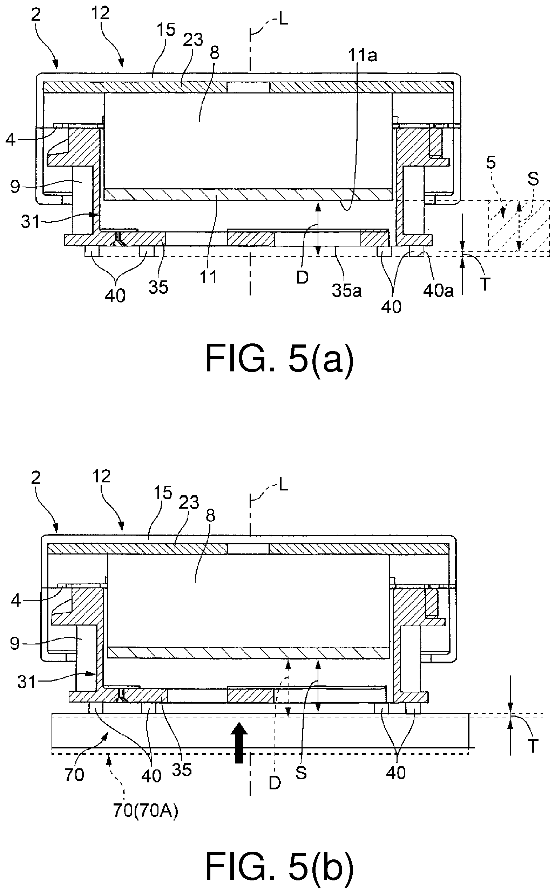

FIG. 5(a) and FIG. 5(b) include explanatory drawings of a method for manufacturing the linear actuator 1. FIG. 5(a) is an explanatory drawing with regard to a distance dimension, from the bottom surface 11a of the core member 11 to a tip of the projection parts 40 provided at the bottom plate part 35 of the coil bobbin 31, in the direction of the axis line 'L'; and meanwhile, FIG. 5(b) is an explanatory drawing with regard to a manufacturing step of crushing tip parts of the projection parts 40. In FIG. 5(a), a length of the damper members 5 in the direction of the axis line 'L' is indicated as reference.

At a time of manufacturing the linear actuator 1, as shown in FIG. 5(a), the movable element 2 is supported by the coil bobbin 31 via the spring 4. Then, in a situation where the direction of the axis line 'L' of the coil bobbin 31 (the moving direction of the movable element 2) is oriented to a vertical direction; a distance dimension 'D' in the direction of the axis line 'L', stretching from the bottom surface 11a of the core member 11 to a tip 40a of the projection parts 40 provided at the bottom plate part 35 of the coil bobbin 31, is measured. Then, there are obtained the distance dimension 'D', the specified dimension 'S' set up in advance, and a difference 'T'.

Then, the coil bobbin 31 is formed in such a way that; a distance dimension from the bottom surface 11a of the core member 11 to a bottom surface 35a of the bottom plate part 35 of the coil bobbin 31 is shorter than the specified dimension 'S' at a time of supporting the movable element 2 via the spring 4; and moreover a distance dimension from the bottom surface 11a of the core member 11 to the tip 40a of the projection parts 40 is longer than the specified dimension 'S'.

Next, the coil bobbin 31 is kept in a stationary situation. Then, as shown with a dotted line in FIG. 5(b); a jig 70 made of a metallic flat plate, having been heated, is placed at a contact position 70A for contacting the tip 40a of the projection parts 40 from the direction of the axis line 'L'. After that, as shown with an arrow and a solid line in FIG. 5(b); the jig 70 is pushed along the direction of the axis line 'L', in such a way as to move closer toward the coil bobbin 31 so as to be transferred for the difference 'T'. Thus, the jig 70 crushes the tip parts of the projection parts 40 for the difference 'T', while melting each of the projection parts 40 by heat. As a result of that, the distance dimension 'D' from the bottom surface 11a of the core member 11 to the tip 40a of the projection parts 40 is made to be the specified dimension 'S'.

After that; while the locating plate 63 of the base 32 is inserted into the locating concave part 39 of the bottom surface of the bottom plate part 35; the base 32 overlaps with the coil bobbin 31 from a side opposite to the movable element 2, and the damper members 5 having the specified dimension 'S' as a dimension in the direction of the axis line 'L' are placed between the movable element 2 and the stationary element 3. More specifically to describe, in a situation where the damper members 5 are inserted through the holes 37 for inserting the damper members, in the coil bobbin 31; a top end surface of the damper members 5 contacts the core member 11 of the movable element 2, and meanwhile a bottom end surface of the damper members 5 contacts the base 32 of the stationary element 3.

After that, a space between the bottom plate part 35 of the coil bobbin 31 and the base 32 is filled with an adhesive material, and then the adhesive material is hardened. In this way, a situation shown in FIG. 2(b) is obtained, and the linear actuator 1 is completed.

According to the present embodiment; by way of crushing the tip parts of the projection parts 40 of the coil bobbin 31, the distance dimension 'D' from the bottom surface 11a of the core member 11 of the movable element 2 to the tip 40a of the projection parts 40 of the bottom plate part 35 of the coil bobbin 31 is made to be the specified dimension 'S' corresponding to a dimension of the damper members 5. As a result of that, the distance dimension 'D' from the bottom surface 11a of the core member 11 of the movable element 2 to the top surface 32a of the base 32 is set with the specified dimension 'S'. Therefore, variations in a stroke and a resonance frequency of the movable element 2, due to the damper members 5 inserted between the bottom surface 11a of the core member 11 and the top surface 32a of the base 32 are not observed among manufactured products.

In other words, the dimension from the bottom surface 11a of the core member 11 to the top surface 32a of the base 32 is a value as a result of a calculation, in which a thickness of the end plate part 15 of the cap member 12, a thickness of the magnetic plate 23, a thickness of the permanent magnet 8, and a thickness of the first core member 11 are subtracted from a total dimension of summing a height of the coil bobbin 31, a thickness of the spring 4, and a height from the spring 4 to a top surface of the end plate part 15 of the cap member 12; and therefore , the value as a result of a calculation includes accumulation of dimensional tolerances of the components described above. Accordingly, it is not easy to obtain an accuracy of the distance dimension 'D' from the bottom surface 11a of the core member 11 the movable element 2 to the top surface 32a of the base 32, based on dimension accuracies of the components described above. In the meantime, for obtaining the accuracy of the distance dimension 'D' from the bottom surface 11a of the core member 11 of the movable element 2 to the top surface 32a of the base 32, based on the dimension accuracies of the components described above, the dimension accuracies of the components must be improved so that manufacturing costs of the components increase.

On the other hand, according to the present embodiment; the tip parts of the projection parts 40 are crushed for a required dimension (the difference 'T') in such a way as to set the distance dimension 'D' from the bottom surface 11a of the core member 11 of the movable element 2 to the tip 40a of the projection parts 40 of the coil bobbin 31 with the specified dimension 'S'. Therefore, without any relation to the dimensional tolerances of the components, the dimension from the bottom surface 11a of the core member 11 of the movable element 2 to the top surface 32a of the base 32 can be set with the specified dimension 'S' corresponding to the length dimension of the damper members 5.

Furthermore, according to the present embodiment; a distance between the bottom surface 11a of the core member 11 and the top surface 32a of the base 32 is set with the specified dimension 'S' that is the same as the length dimension of the damper members 5, and therefore a stroke of the movable element 2 can be secured.

Moreover, according to the present embodiment; the projection parts 40 of the coil bobbin 31, which are made of a resin material, are melted and crushed by heat; and therefore it is possible to crush the tip parts of the projection parts 40 accurately for the difference 'T'.

Incidentally, the jig 70 may be provided with a protruding part that can be inserted into the holes 37 for inserting the damper members in the coil bobbin 31; the protruding part having its length of the specified dimension 'S'. In this case; at the time of crushing the projection parts 40 of the coil bobbin 31 by use of the jig 70 that has been heated, the coil bobbin 31 and the movable element 2 are fixed in such a way as not to move in the direction of the axis line 'L'. Subsequently, the protruding part provided to the jig 70 is inserted into the holes 37 for inserting the damper members, and then the jig 70 is pushed along the direction of the axis line 'L', in such a way as to move closer toward the coil bobbin 31, until a tip part of the protruding part contacts the bottom surface 11a of the core member 11, so as to individually crush the projection parts 40. In this way, it is also possible to set the distance dimension 'D' from the bottom surface 11a of the core member 11 to the tip 40a of the projection parts 40, with the specified dimension 'S'.

### (Second embodiment)

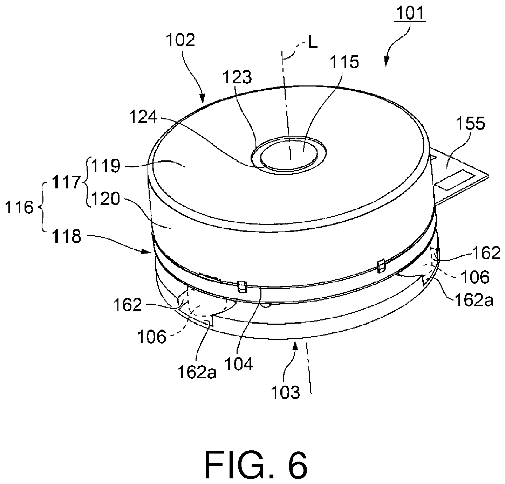

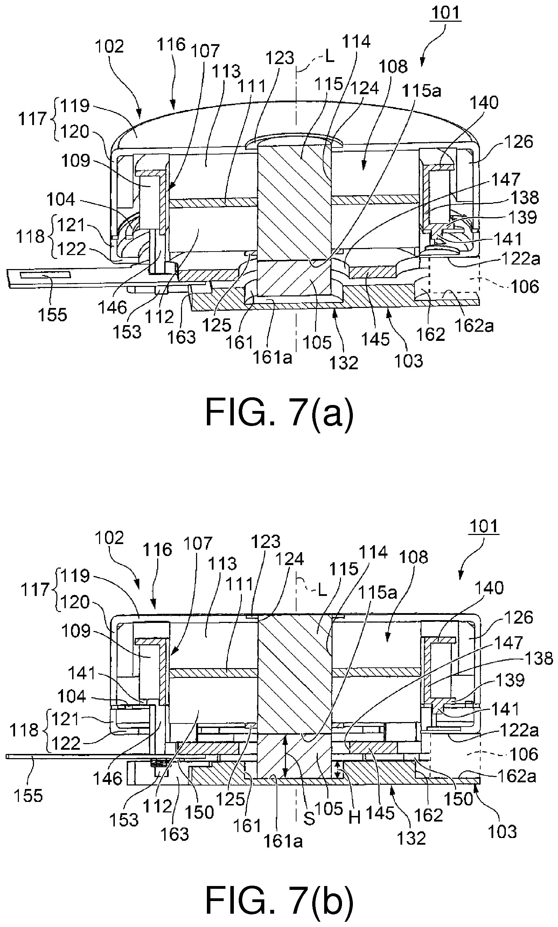

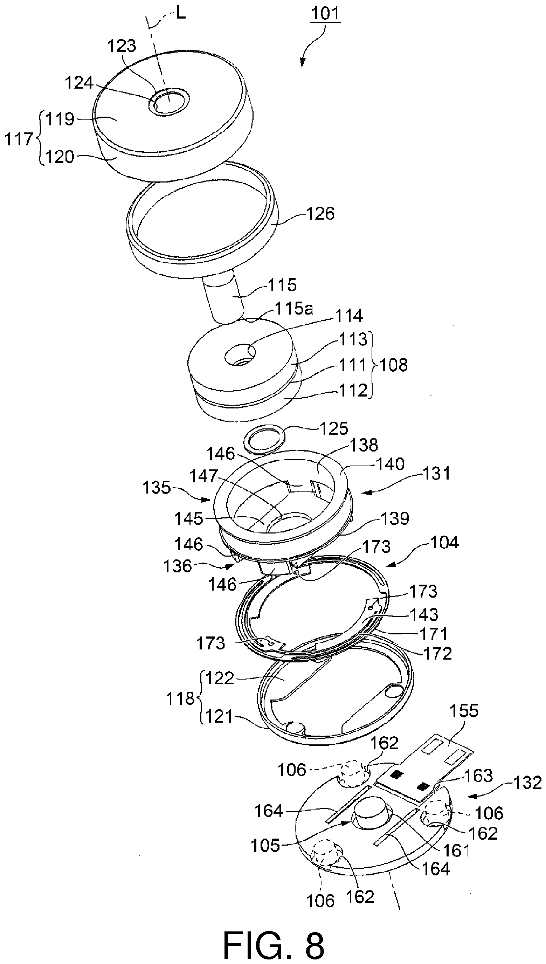

FIG. 6 is a perspective view of a linear actuator according to a second embodiment of the present invention. FIG. 7(a) and FIG. 7(b) include cross-sectional views of the linear actuator shown in FIG. 6. In FIG. 7(a), the cross section of the linear actuator is seen from an obliquely upward direction; and in FIG. 7(b), the cross section of the linear actuator is seen from a direction perpendicular to a moving direction of a movable element. FIG. 8 is an exploded perspective view of the linear actuator shown in FIG. 6.

### (General configuration)

As shown in FIG. 6 through FIG. 8, a linear actuator 101 includes a movable element 102, a stationary element 103, and a spring 104 that connects the movable element 102 and the stationary element 103. The stationary element 103 supports the movable element 102 in such a way as to be movable, via the spring 104. Between the movable element 102 and the stationary element 103, there are placed a first damper member 105 and three second damper members 106 that surround the first damper member 105 from an outer circumferential side. The linear actuator 101 further includes a magnetic drive mechanism 107 in order to move the movable element 102. The magnetic drive mechanism 107 is provided with a magnet member 108 held by the movable element 102, and a drive coil 109 held by the stationary element 103. In the following explanation, a moving direction of the movable element 102 is dealt with as a direction of an axis line 'L'. The direction of the axis line 'L' is consistent with a central axis line of the magnet member 108 mounted on the movable element 102 and a central axis line of the drive coil 109 mounted on the stationary element 103. For the purpose of convenience, an upside and a downside of the linear actuator 101 are explained as follows, with reference to upward and downward directions in the drawings. That is to say; in the direction of the axis line 'L', a side where the stationary element 103 is positioned is a downside, meanwhile a side where the movable element 102 is positioned is an upside.

### (Movable element)

The movable element 102 is provided with the magnet member 108 being annular. The magnet member 108 is provided with a core member 111 being annular, which is made of magnetic material; and a first magnetic piece 112 and a second magnetic piece 113, which are annular-shaped and laminated in a vertical direction so as to sandwich the core member 111 therebetween. The magnet member 108 is flat-shaped, having a dimension in the direction of the axis line 'L' being short. The magnet member 108 has a top end surface and a bottom end surface that are perpendicular to the direction of the axis line 'L' (the moving direction of the movable element 102).

Moreover, the movable element 102 is provided with a shaft 115 that is fit in a center hole 114 of the magnet member 108. The shaft 115, having a constant diameter, stretches in the direction of the axis line 'L'. Furthermore, the movable element 102 is provided with a cap member 116 that covers the magnet member 108 from an upper side and a lateral side.

The cap member 116 includes an upper cap member 117 and a lower cap member 118. The upper cap member 117 includes a circular end plate part 119 having a constant thickness, and an upper cylindrical part 120 protruding downward from an outer circumferential edge of the end plate part 119. The lower cap member 118 includes a lower cylindrical part 121 that stretches downward from a bottom end edge of the upper cylindrical part 120, and a protrusion plate part 122 protruding toward an inner circumferential side from a bottom end edge of the lower cylindrical part 121.

At a middle part of on an upper surface of the end plate part 119, there is formed a circular concave part 123. At a middle part of the concave part 123, there is formed a shaft retaining hole 124. At an upper end part of an inner circumferential surface of the upper cylindrical part 120, there is fixed a spacer 126 being annular. In the meantime, while being retained in the shaft retaining hole 124, an upper end part of the shaft 115 is welded to the end plate part 119

Moreover, the movable element 102 is provided with a washer 125 that contacts an opening edge of the center hole 114 of the magnet member 108, from a lower side. A lower end part of the shaft 115 is inserted into the washer 125; and in the situation, the washer 125 is welded to the shaft 115. Thus, while contacting the end plate part 119 of the cap member 116, the magnet member 108 is fixed between the cap member 116 and the washer 125.

In the meantime, the end plate part 119 has a larger diameter than the magnet member 108 has. Therefore, in a situation where the cap member 116 is fixed to the magnet member 108, there is formed a gap having a constant space in a circumferential direction, between an annular outer circumferential surface of the magnet member 108 and the upper cylindrical part 120 as well as the lower cylindrical part 121.

### (Stationary element)

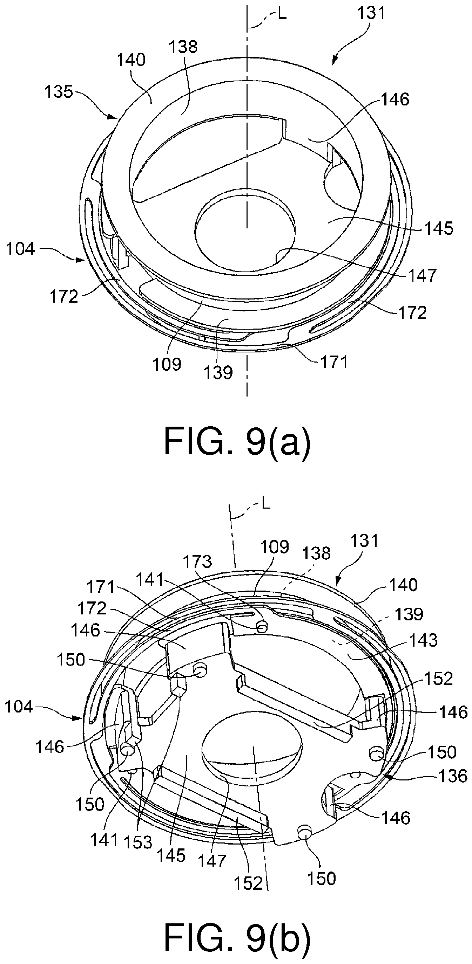

Next, the stationary element 103 is explained with reference to FIG. 7(a) through FIG. 9(b). FIG. 9(a) is a perspective view showing a situation where a coil bobbin is observed from an upper side; while the coil bobbin around which the drive coil 109 is wound, is provided with the spring 104; and meanwhile FIG. 9(b) is a perspective view showing a situation where the coil bobbin is observed from a lower side; while the coil bobbin around which the drive coil 109 is wound, is provided with the spring 104. As shown in FIG. 7(a), FIG. 7(b) and FIG. 8, the stationary element 103 is provided with a coil bobbin 131 (a first element) around which the drive coil 109 is wound, and a base 132 (a second element) that overlaps with the coil bobbin 131 from a side opposite to the movable element 102. The coil bobbin 131 supports the movable element 102 via the spring 104 in such a way as to be movable in the direction of the axis line 'L'.

### (Coil bobbin)

The coil bobbin 131 is made of a resin material. As shown in FIG. 8, the coil bobbin 131 is provided with a cylindrical part 135 and a protruding part 136 that continuously protrudes downward out of the cylindrical part 135.

### (Coil bobbin)

An axis line 'L' of the cylindrical part 135 is consistent with an axis line 'L' of the magnet member 108. As shown in FIG. 7(a) and FIG. 7(b), the cylindrical part 135 is provided with; a tubular torso part 138, wherein the drive coil 109 is wound around an outer circumferential surface of the tubular torso part 138; a lower flange part 139 being annular, which is expanded in its diameter at a lower side of the tubular torso part 138; and an upper flange part 140 being annular, which is expanded in its diameter at an upper side of the tubular torso part 138. As shown in FIG. 9(b), the lower flange part 139 is provided with three spring retainer projections 141 on its annular bottom end surface. The three spring retainer projections 141 are placed around the axis line 'L' at equal angular intervals. Each of the spring retainer projections 141 works as a retainer part for retaining a stationary-element-side connection part 143 of the spring 104.

As shown in FIG. 8, the protruding part 136 is provided with; a bottom plate part 145 that faces the magnet member 108 of the movable element 102 in the direction of the axis line 'L'; and connecting parts 146 stretching in the direction of the axis line 'L', which connect the bottom plate part 145 and the tubular torso part 138. In the meantime, as shown in FIG. 9(b), the bottom plate part 145 is generally a rectangle in its planar shape, and the connecting parts 146 stretch upward from four corners of the bottom plate part 145. Between two of the connecting parts 146 positioned side by side in a circumferential direction, there is formed a space. At a center of the bottom plate part 145, there is provided a hole 147 for inserting the damper member.

At four corners of a bottom surface of the bottom plate part 145, there are individually formed projection parts 150 that protrude downward, being shaped to be columnar. A tip part of each of the projection parts 150 is crushed at a time of assembling the linear actuator 101.

Furthermore, on the bottom surface of the bottom plate part 145, there are provided a pair of ribs 152 that individually stretch along an edge of a long side of the rectangle in the planar shape. Moreover, on the bottom surface of the bottom plate part 145, there are provided a pair of terminal parts 153. The pair of terminal parts 153 are formed between two of the projection parts 150 provided at both sides that sandwich a short side of the rectangle in the planar shape of the bottom plate part 145. Terminals of the drive coil 109 are individually entangled around the terminal parts 153, and then connected to a circuit board 155.

### (Base)

As shown in FIG. 8, the base 132 is shaped to be disk-like. On a top surface of the base 132, there is formed a first concave part 161, being circular, at a center position. Moreover, three second concave parts 162 are formed at positions that surround the first concave part 161 from an outer circumferential side. The second concave parts 162 are formed around the axis line 'L' at equal angular intervals. Meanwhile, the three second concave parts 162 individually have the same distance from the axis line 'L' (i.e., a distance from the first concave part 161).

According to the present embodiment; in a view from the direction of the axis line 'L', the three second concave parts 162 are provided at positions that overlap with the three spring retainer projections 141 provided on the lower flange part 139. A bottom surface 161a of the first concave part 161 and a bottom surface 162a of the second concave parts 162 are planes perpendicular to the direction of the axis line 'L' (the moving direction of the movable element 102). The bottom surface 161a of the first concave part 161 faces the magnet member 108, in the direction of the axis line 'L'. The bottom surface 162a of the second concave parts 162 faces the protrusion plate part 122 of the cap member 116 (the lower cap member 118), in the direction of the axis line 'L'. A depth dimension 'H' of the first concave part 161 and a depth dimension 'H' of the second concave parts 162 are the same. At an outer circumferential edge part of the base 132, there is provided a cutout part 163 for placing the circuit board 155.

Moreover, in the base 132, there are provided a pair of slits 164 that stretch in parallel while sandwiching the axis line 'L' between them. Each of the slits 164 is placed between the first concave part 161 and the second concave parts 162. The ribs 152, provided in the bottom plate part 145 of the coil bobbin 131, can individually be inserted into each of the slits 164. The coil bobbin 131 is mounted on the base 132, while being located in a direction, perpendicular to the direction of the axis line 'L', by way of individually inserting the ribs 152 into each of the slits 164 of the base 132. The coil bobbin 131 is fixed to the base 132, by use of an adhesive material filled between the bottom plate part 145 and the base 132.

### (Spring)

The spring 104 is a flat spring component, whose thickness direction is oriented in the direction of the axis line 'L', As shown in FIG. 8, FIG. 9(a) and FIG. 9(b), the spring 4 is provided with; the stationary-element-side connection part 143, connected to the stationary element 103; a movable-element-side connection part 171, connected to the movable element 102; and three arm parts 172 connected to the stationary-element-side connection part 143 and the movable-element-side connection part 171. The stationary-element-side connection part 143 is placed at an inner circumferential side with respect to the movable-element-side connection part 171 and the arm parts 172, and meanwhile the movable-element-side connection part 171 is placed at an outer circumferential side with respect to the arm parts 172.

In the stationary-element-side connection part 143, there are formed retaining holes 173 into which the spring retainer projections 141 of the lower flange part 139 of the coil bobbin 131 are individually fit. The spring 104 is connected to the coil bobbin 131 by way of individually inserting the spring retainer projections 141 into each of the retaining holes 173. The movable-element-side connection part 171 is pinched between the upper cylindrical part 120 of the upper cap member 117 and the lower cylindrical part 121 of the lower cap member 118, and welded thereto. Thus, the spring 104 is connected to the cap member 116.

In a situation where the stationary-element-side connection part 143 of the spring 104 is connected to the coil bobbin 131, and meanwhile the movable-element-side connection part 171 is connected to the cap member 116; the magnet member 108 is positioned at an inner circumferential side of the coil bobbin 131, as shown in FIG. 7(a) and FIG. 7(b). Meanwhile, at an outer circumferential side of the core member 111 of the magnet member 108, there are placed the tubular torso part 138 of the coil bobbin 131 and the drive coil 109 wound around the tubular torso part 138. In the meantime, the protrusion plate part 122 of the cap member 116 is placed a little bit beneath a bottom surface of the magnet member 108. Moreover, the upper flange part 140 of the coil bobbin 131 faces the spacer 126, which is fixed inside the cap member 116, while having a small gap therebetween. Then, the upper flange part 140 of the coil bobbin 131 and the spacer 126 make up a stopper mechanism to restrict a movable range of the movable element 102 at a time when the movable element 102 moves due to an external force in a direction perpendicular to the axis line 'L'.

### (Damper members)

As shown in FIG. 8, the first damper member 105 and the second damper members 106 individually have a columnar shape. A diameter of the first damper member 105 is greater than a diameter of the second damper members 106, and the diameter of the first damper member 105 is consistent with a diameter of the shaft 115. The first damper member 105 and the second damper members 106 have the same length in the direction of the axis line 'L'. The length of the damper member 105 and the second damper members 106, in the direction of the axis line 'L', is consistent with a specified dimension 'S'.

As shown in FIG. 7(a), the first damper member 105 is placed between the movable element 102 and the stationary element 3, while being inserted through the hole 147 for inserting the damper member, the hole 147 being provided in the bottom plate part 145 of the coil bobbin 131. The hole 147 for inserting the damper member is a circular opening section having a larger diameter than the first damper member 105 has. The first damper member 105 makes its top end surface contact with a bottom surface 115a (a movable-element-side facing surface) of the shaft 115 of the movable element 102, and makes its bottom end surface contact with a bottom surface 161a (a stationary-element-side facing surface) of the first concave part 161 provided in the base 132.

The second damper members 106 make their top end surface contact with a bottom surface 122a (a movable-element-side facing surface) of the protrusion plate part 122 of the cap member 116, and makes their bottom end surface contact with a bottom surface 162a (a stationary-element-side facing surface) of the second concave parts 162 of the base 132.

Incidentally, the first damper member 105 and the second damper members 106 are made from silicone gel having a needle entering level of 90 to 110.

### (Method for manufacturing the linear actuator)

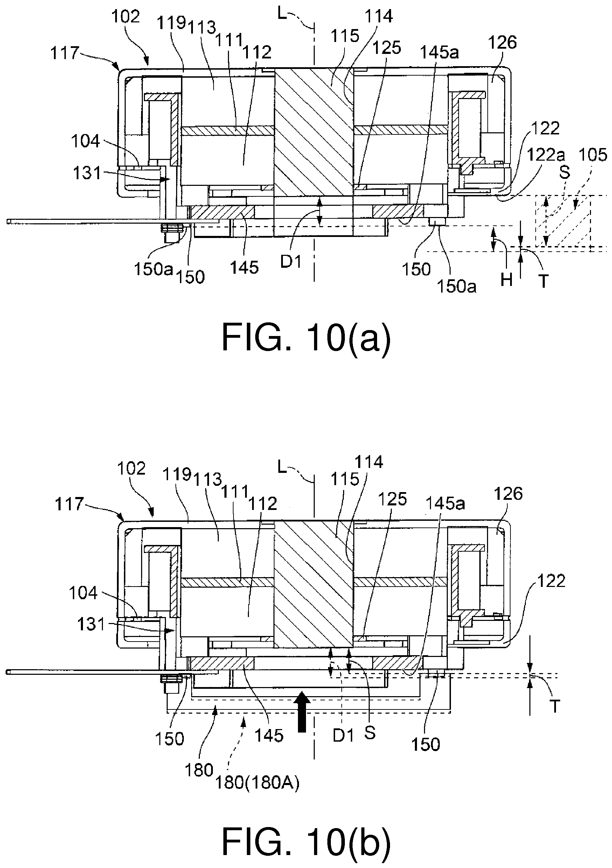

FIG. 10(a) and FIG. 10(b) include explanatory drawings of a method for manufacturing the linear actuator 101. FIG. 10(a) is an explanatory drawing with regard to a distance dimension, from the bottom surface 115a of the shaft 115 to a tip of the projection parts 150 provided at the bottom plate part 145 of the coil bobbin 131, in the direction of the axis line 'L'; and meanwhile, FIG. 10(b) is an explanatory drawing with regard to a manufacturing step of crushing tip parts of the projection parts 150. In FIG. 10(a), a length of the damper members 105 in the direction of the axis line 'L' is indicated as reference.

At a time of manufacturing the linear actuator 101, the movable element 102 is supported by the coil bobbin 31 via the spring 104. Then, as shown in FIG. 10(a); in a situation where the direction of the axis line 'L' of the coil bobbin 131 (the moving direction of the movable element 102) is oriented to a vertical direction, a distance dimension 'D1' in the direction of the axis line 'L', stretching from the bottom surface 115a of the shaft 115 to a tip 150a of the projection parts 150 of the bottom plate part 145 of the coil bobbin 131, is measured. After that, there is calculated a difference 'T' between a total dimension ('D1' + 'H') and the specified dimension 'S' set up in advance; the total dimension ('D1' + 'H') being obtained by adding the depth dimension 'H' of the first concave part 161 (refer to FIG. 7(b)) to the distance dimension 'D1'.

Then, the coil bobbin 131 is formed in such a way that; a distance dimension from the bottom surface 115a of the shaft 115 to a bottom surface 145a of the bottom plate part 145 of the coil bobbin 131 is shorter than a dimension as a result of subtracting the depth dimension 'H' of the first concave part 161 from the specified dimension 'S' at a time of supporting the movable element 102 via the spring 104; and moreover a distance from the bottom surface 115a of the shaft 115 to the tip 150a of the projection parts 150 is longer than the dimension as a result of subtracting the depth dimension 'H' of the first concave part 161 from the specified dimension 'S'.

Next, the coil bobbin 131 is kept in a stationary situation. Then, as shown with a dotted line in FIG. 10(b); a jig 180 provided with an end surface is heated, wherein the end surface being able to contact the tip 150a of the projection parts 150 of the coil bobbin 131 and the end surface being perpendicular to the axis line 'L', and then the jig 180 is placed at a contact position 180A where the end surface contacts the tip 150a of the projection parts 150. After that, as shown with an arrow and a solid line in FIG. 10(b); the jig 180 is pushed along the direction of the axis line 'L', in such a way as to move closer toward the coil bobbin 131 so as to be transferred for the difference 'T'. Thus, the jig 180 crushes the tip parts of the projection parts 150 for the difference 'T', while melting each of the projection parts 150 by heat. As a result of that, the distance dimension 'D1' from the bottom surface 115a of the shaft 115 to the tip 150a of the projection parts 150 is made to be the dimension as a result of subtracting the depth dimension 'H' of the first concave part 161 from the specified dimension 'S'.

After that; while the ribs 152 of the bottom plate part 145 is inserted into the slits 164 of the base 132; the base 132 overlaps with the coil bobbin 131 from a side opposite to the movable element 102, and the first damper member 105 as well as the second damper members 106, both having the specified dimension 'S' as a dimension in the direction of the axis line 'L' are placed between the movable element 102 and the stationary element 103.

More specifically to describe, in a situation where the first damper member 105 is inserted through the hole 147 for inserting the damper member, in the coil bobbin 131; a top end surface of the first damper member 105 contacts the shaft 115 of the movable element 102 and gets fixed thereto, and meanwhile a bottom end surface of the first damper member 105 contacts the base 132 (the bottom surface 161a of the first concave part 161) of the stationary element 103 and gets fixed thereto. In a parallel way, a top end surface of the second damper members 106 contacts the protrusion plate part 122 of the cap member 116 of the movable element 102 and gets fixed thereto, and meanwhile a bottom end surface of the second damper members 106 contacts the base 132 (the bottom surface 162a of the second concave parts 162) of the stationary element 103 and fixed thereto.

After that, a space between the bottom plate part 145 of the coil bobbin 131 and the base 132 is filled with an adhesive material, and then the adhesive material is hardened. In this way, a situation shown in FIG. 7(b) is obtained, and the linear actuator 101 is completed.

According to the present embodiment as well, the same operation and effect can be obtained, as being obtained in the first embodiment.

Incidentally, the jig 180 may be provided with a protruding part that can be inserted into the hole 147 for inserting the damper member in the coil bobbin 131. Then, a protruding dimension of the protruding part is made to be the dimension as a result of subtracting the depth dimension 'H' of the first concave part 161 from the specified dimension 'S'. In this case; at the time of crushing the projection parts 150 of the coil bobbin 131 by use of the jig 180 that has been heated, the coil bobbin 131 and the movable element 102 are fixed in such a way as not to move in the direction of the axis line 'L'. Subsequently, the protruding part provided to the jig 180 is inserted into the hole 147 for inserting the damper member, and then the jig 180 is pushed along the direction of the axis line 'L', in such a way as to move closer toward the coil bobbin 131, until a tip part of the protruding part contacts the bottom surface 115a of the shaft 115, so as to individually crush the projection parts 150. In this way, it is also possible to set the distance dimension 'D1' from the bottom surface 115a of the shaft 115 to the tip 150a of the projection parts 150, with the dimension as a result of subtracting the depth dimension 'H' of the first concave part 161 from the specified dimension 'S'.

Furthermore, though the first damper member 105 and the second damper members 106 are provided as a damper member in the embodiment described above, only one of the two sorts of damper members may be provided. Moreover, though the second damper members 106 are provided at three locations in the circumferential direction, the second damper members 106 may be provided at four or more locations. Furthermore, a plurality of second damper members 106 may be placed in an annular arrangement.

### (Modification)

Though in the embodiments described above, the projection parts 40 & the projection parts 150 are provided to the bottom surfaces of the bottom plate part 35 & the bottom plate part 145, which face the base 32 & the base 132, respectively, in the coil bobbin 31 & the coil bobbin 131; the projection parts 40 & the projection parts 150 may be provided to sides of top surfaces, which face the coil bobbin 31 & the coil bobbin 131, respectively, in the base 32 & the base 132; and then in a manufacturing step for the linear actuator 1 & the linear actuator 101, by way of crushing the projection parts 40 & the projection parts 150, each distance dimension between the movable element 102 and the base 32 & the base 132 may be made so as to be corresponding to each length of the damper members 5, the first damper member 105 & the second damper members 106.

### [Reference Numerals]

1 & 101. linear actuator
2 & 102. movable element
3 & 103. stationary element
4 & 104. spring (spring member)
5, 105 & 106. damper member
7 & 107. magnetic drive mechanism
8, 112 & 113. permanent magnet
9 & 109. drive coil
11a. bottom surface of the core member (movable-element-side facing surface)
31 & 131. coil bobbin (first element)
32. base (second element)
32a. top surface of the base (stationary-element-side facing surface)
40 & 150. projection parts (distance adjusting part)
108a. bottom surface of the magnet member (movable-element-side facing surface)
122a. bottom surface of the protrusion plate part (movable-element-side facing surface)
161a. bottom surface of the first concave part 161 (stationary-element-side facing surface)
162a. bottom surface of the second concave parts 162 (stationary-element-side facing surface)
'D' & 'D1' distance dimension
'S' specified dimension

## Claims

1. A linear actuator comprising:
a movable element;
a stationary element; and
a damper member inserted between a movable-element-side facing surface of the movable element and a stationary-element-side facing surface of the stationary element, the movable-element-side facing surface and the stationary-element-side facing surface facing each other in a moving direction of the movable element;
wherein, the stationary element is provided with a first element that supports the movable element via a spring member in such a way as to be movable, and a second element that includes the stationary-element-side facing surface and overlaps with the first element from a side opposite to the movable element in the moving direction; and
between the first element and the second element, a distance adjusting part that has adjusted a distance between the first element and the second element in the moving direction is provided, by way of deforming the first element or the second element.

2. The linear actuator according to claim 1;
wherein, the distance adjusting part is a projection part protruding from one of the first element and the second element toward the other; and
a tip part of the projection part is crushed.

3. The linear actuator according to claim 2;
wherein, the distance adjusting part is a projection part protruding from the first element toward the second element; and
a distance dimension, with which a tip of the projection part in a crushed state and the movable-element-side facing surface are apart from each other in the moving direction, is the same as a length of the damper member in the moving direction.

4. The linear actuator according to claim 2;
wherein, the first element is made of a resin material; and
the tip part of the projection part is melted and crushed by heat.

5. The linear actuator according to any one of claim 1 through claim 4;
wherein, the linear actuator comprises a magnetic drive mechanism for moving the movable element;
the magnetic drive mechanism includes a permanent magnet held in the movable element, and a drive coil held in the stationary element;
the first element is a coil bobbin that surrounds the permanent magnet from a direction intersecting the moving direction; and
the drive coil is wound around the coil bobbin.

6. The linear actuator according to any one of claim 1 through claim 5;
wherein, the damper member is a gel damper member.

7. A method for manufacturing the linear actuator described in claim 3 above, the method comprising;
supporting the movable element with the first element via the spring member;
making the distance dimension between a tip of the projection part and the movable-element-side facing surface, with a specified dimension that is predetermined, by way of crushing the tip part of the projection part provided to the first element; and
overlaying the second element on the first element, from a side opposite to the movable element in the moving direction; and placing the damper member having the specified dimension as a dimension in the moving direction, between the movable-element-side facing surface and the stationary-element-side facing surface.
